# EUROPEAN PATENT SPECIFICATION

(11) **EP 3 211 388 B1**
(45) Date of publication and mention of the grant of the patent: **16.12.2020**
(21) Application number: 17156903.1
(22) Date of filing: 20.02.2017
(51) Int. Cl.: G01G 19/414, G07G 1/00, G06K 9/42

(54) **WEIGHING SYSTEM**
WÄGESYSTEM
SYSTÈME DE PESAGE

(30) Priority: 29.02.2016 JP 2016037686
(43) Date of publication of application: 30.08.2017
(73) Proprietor: Toshiba TEC Kabushiki Kaisha, Tokyo 141-8562 (JP)
(72) Inventor: OKAMURA, Atsushi, Shinagawa-ku, Tokyo 141-8562 (JP)
(74) Representative: Bandpay & Greuter

(56) References cited:
- EP-A1- 2 533 217
- EP-A1- 2 897 110
- US-A1- 2013 058 541

## Description

### FIELD

The present invention relates to weighing sales technologies in general, e.g. used in a retail store, and embodiments described herein relate in particular to a weighing system, as well as a method for weighing a commodity, and a computer-readable recording medium and computer program product for performing such a method.

### BACKGROUND

US2013/0058541 discloses an image processing apparatus using input imaged images. EP2897110 discloses a reading apparatus recognizing the commodity based on an appearance feature amount and a size. EP2533217 concerns a commodity search device having a number input unit for inputting the number of the weighed commodities. The commodities are searched according to individual weight.

Conventionally, in a large retail store such as a supermarket, a weighing sales operation (sell by weight) in which a weight of a commodity a customer wants to purchase is measured to sell the commodity is carried out. In the sell by weight, the customer puts a specific quantity of the commodity he or she needs in a container. The customer places the container in which the commodity is put on a weighing device. With this operation, the weighing device calculates a price corresponding to the weight of the commodity.

There is a case in which a commodity already weighed is also displayed at a sales floor at which the sell by weight is provided. A label on which a code symbol representing a price corresponding to the weight of the commodity is printed is attached to the commodity already weighed. Thus, it is not necessary for the customer to weigh the commodity already weighed. However, there is a case in which the customer places both a commodity already weighed and a commodity not yet weighed on the weighing device by mistake. In this case, the weighing device measures the weight of the commodities already weighed and not yet weighed. Thus, the weighing device cannot measure the weight of only the commodity not yet weighed without containing the weight of the commodity already weighed.

To solve such problems, the present invention provides a weighing system and method according to independent claims 1 and 6, comprising:
a weighing section configured to measure a weight of a container and a commodity in the container;
an image capturing section configured to capture an image containing the container weighed by the weighing section and commodity information including information indicating the weight of the commodity in the container;
an identification module configured to identify the weight of the container contained in the image captured by the image capturing section;
a reading module configured to read the weight from the commodity information contained in the image captured by the image capturing section; and
a first calculation module configured to calculate the weight of the unmeasured commodity from the weight measured by the weighing section, the weight in a category of the container identified by the identification module and the weight read from the commodity information by the reading module.

Preferably, the weighing system further comprises:
a second calculation module configured to calculate a price of the unmeasured commodity on the basis of the weight of the unmeasured commodity calculated by the first calculation module and a price per unit weight of the commodity; and
a third calculation module configured to calculate a total price of the commodity placed on the weighing section, wherein
the third calculation module calculates the total price of the commodity placed on the weighing section from the price of the unmeasured commodity calculated by the second calculation module and the price of the commodity read from the commodity information by the reading module on condition that the reading module reads information indicating the price of the commodity in the container from the commodity information.

Preferably still, the third calculation module calculates the total price of the commodity placed on the weighing section, using a price obtained by applying price change information to the price of the commodity on condition that the price change information for changing the price of the commodity is read by the reading module from the commodity information.

Preferably yet, the weighing system further comprises:
an image capturing control module configured to enable the image capturing section to capture an image used to identify the weight of the container by the identification module and an image used to read the commodity information by the reading module according to different image capturing settings.

Preferably further,
the image capturing control module enables the image capturing section to capture an image used to read the commodity information by the reading module without capturing the image used to identify the weight of the container by the identification module on condition that the weighing section does not detect the weight of the commodity.

The invention also relates to a method for weighing a commodity., comprising the steps of:
- measuring, by a weighing section, a weight of a container and a commodity in the container;
- capturing, by an image capturing section, an image containing the container weighed by the weighing section and commodity information including information indicating the weight of the commodity in the container;
- identifying, by an identification module, the weight of the container contained in the image captured by the image capturing section;
- reading, by a reading module, the weight from the commodity information contained in the image captured by the image capturing section; and
- calculating, by a first calculation module, the weight of the unmeasured commodity from the weight measured by the weighing section, the weight in a category of the container identified by the identification module and the weight read from the commodity information by the reading module.

Suitably, the method further comprises the steps of:
- calculating, by a second calculation module, a price of the unmeasured commodity on the basis of the weight of the unmeasured commodity calculated by the first calculation module and a price per unit weight of the commodity; and
- calculating, by a third calculation module, a total price of the commodity placed on the weighing section, wherein
the calculating step by the third calculation module comprises calculating the total price of the commodity placed on the weighing section from the price of the unmeasured commodity calculated by the second calculation module and the price of the commodity read from the commodity information by the reading module on condition that the reading module reads information indicating the price of the commodity in the container from the commodity information.

Suitably still, the calculating step by the third calculation module comprises calculating the total price of the commodity placed on the weighing section, using a price obtained by applying price change information to the price of the commodity on condition that the price change information for changing the price of the commodity is read by the reading module from the commodity information.

Suitably yet, the method further comprises the step of:
- enabling, by an image capturing control module, the image capturing section to capture an image used to identify the weight of the container by the identification module and an image used to read the commodity information by the reading module according to different image capturing settings.

Suitably further, the enabling step by the image capturing control module comprises enabling the image capturing section to capture an image used to read the commodity information by the reading module without capturing the image used to identify the weight of the container by the identification module on condition that the weighing section does not detect the weight of the commodity.

The invention also relates to a computer-readable recording medium having computer-executable instructions adapted to cause the computer system to perform the method as defined above.

The invention further concerns a computer program product comprising program code means stored on a computer readable medium for performing the method as defined above, when the program product us run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is an external perspective view illustrating a weighing system according to an embodiment;
Fig. 2 is a block diagram illustrating the hardware arrangement of the weighing system;
Fig. 3 is a view illustrating an example of the data structure of a container master file;
Fig. 4 is a block diagram illustrating functional components of the weighing system;
Fig. 5 is a view illustrating an example of container list information;
Fig. 6 is a flowchart illustrating the flow of a calculation processing;
Fig. 7 is a flowchart illustrating the flow of a container identification processing; and
Fig. 8 is a flowchart illustrating the flow of a commodity information reading processing.

### DETAILED DESCRIPTION

In accordance with an embodiment, a weighing system comprises a weighing section, an image capturing section, an identification module, a reading module, and a first calculation module. The weighing section measures a weight of a container and a commodity in the container. The image capturing section photographs the container weighed by the weighing section and commodity information including information indicating the weight of the commodity in the container. The identification module identifies the weight of the container contained in the image captured by the image capturing section. The reading module reads the weight from the commodity information contained in the image captured by the image capturing section. The first calculation module calculates the weight of an unmeasured commodity from the weight measured by the weighing section, the weight in a category of the container identified by the identification module and the weight read from the commodity information by the reading module.

Hereinafter, a weighing system according to an embodiment is described in detail with reference to the accompanying drawings. The embodiment described below is one embodiment of the weighing system and does not intend to limit the constitution and specification thereof. The present embodiment is an application example to the weighing system which is introduced to a store such as a supermarket to sell commodities such as precooked foods and meat with the sell by weight.

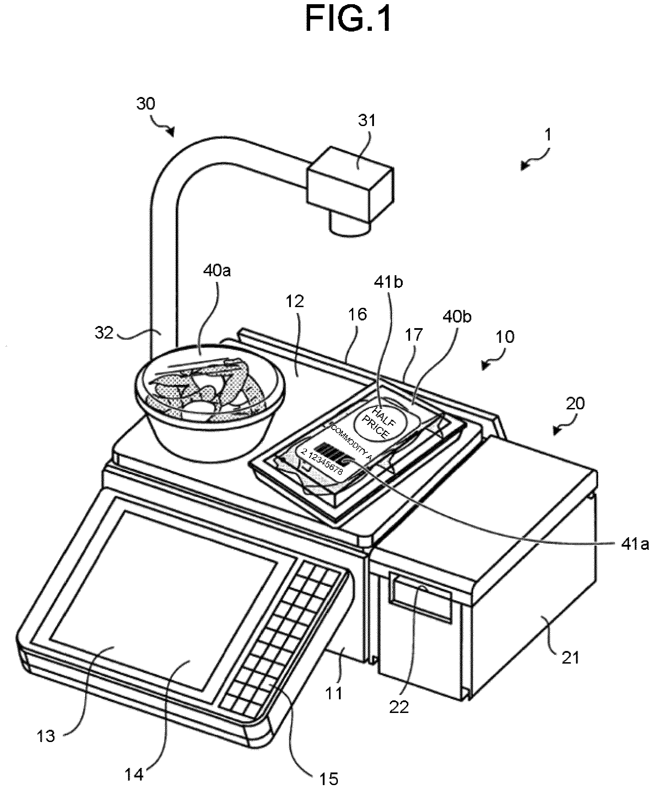

Fig. 1 is an external perspective view illustrating a weighing system 1 according to the embodiment. As shown in Fig. 1, the weighing system 1 comprises an electronic scale 10, a printer 20 and a camera 30, if roughly classified. The electronic scale 10 shown in Fig. 1 is in a state in which containers 40a and 40b are placed thereon. The container 40b is provided with commodity information 41a and 41b relating to a weighed commodity in the container 40b. The commodity information 41a, for example, is a commodity label on which a code symbol such as a barcode or a two-dimensional code is printed. The commodity information 41b, for example, is a seal on which a figure indicating a half price is printed. Furthermore, a method of indicating the commodity information 41a and 41b is not limited to the foregoing forms. For example, the method of indicating the commodity information 41a and 41b may be numerals or characters. Hereinafter, the containers 40a and 40b are referred to as a container 40 if not specifically distinguished. Further, the commodity information 41a and 41b is referred to as commodity information 41 if not specifically distinguished.

The electronic scale 10 measures the weight of the commodity. The electronic scale 10 includes a housing 11, a scale pan 12, a first display section 13, a first touch panel 14, a keyboard 15, a second display section 16, and a second touch panel 17.

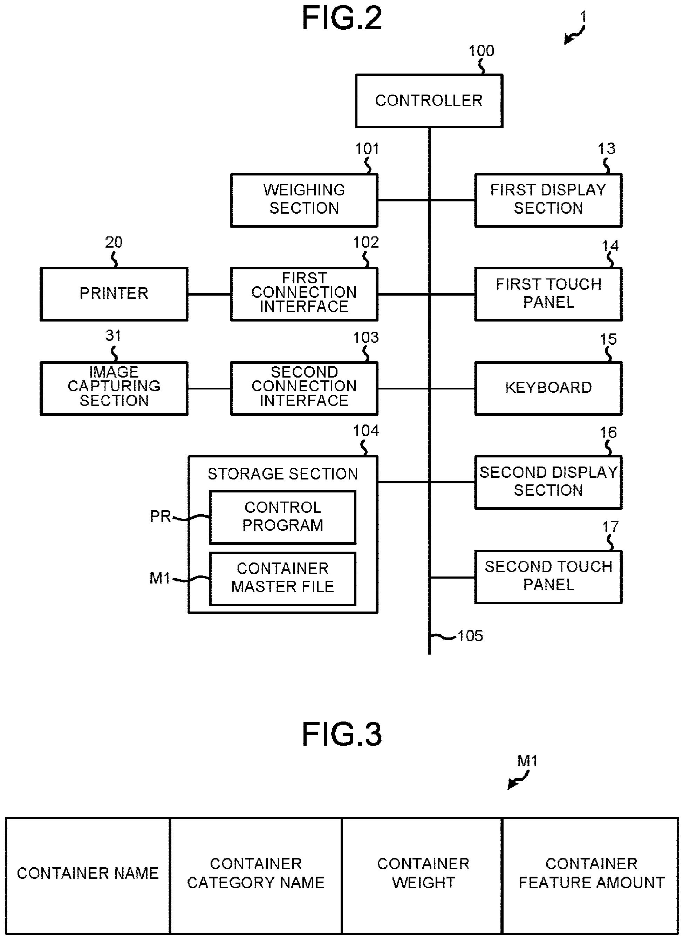

The housing 11 protects a controller 100 (refer to Fig. 2) and a weighing section 101 (refer to Fig. 2) built in the electronic scale 10. The electronic scale 10 includes the scale pan 12, arranged on the entire surface of the housing 11, for placing the commodity to be weighed thereon. The electronic scale 10 includes the first display section 13 at the front surface thereof. The first display section 13 is, for example, a display device such as a liquid crystal display referred to by a store clerk. The first display section 13 is provided with the first touch panel 14 for inputting an operation through selecting a display content on the first display section 13 with a finger or a dedicated pen. The electronic scale 10 includes the keyboard 15 at the right side of the first display section 13 and the first touch panel 14. The keyboard 15 includes keys such as numeric keys for inputting various operations.

The electronic scale 10 includes the second display section 16 at the back side. The second display section 16 is, for example, a display device such a liquid crystal display referred to by a customer. The second display section 16 is provided with the second touch panel 17 for inputting an operation through selection of a display content on the second display section 16 with a finger or a dedicated pen.

The printer 20 issues a label and a receipt. The printer 20 is provided with a housing 21 and an issuing port 22. The housing 21 protects a printing section (not shown) built in the printer 20. The printer 20 includes the issuing port 22 at the font surface. The issuing port 22 discharges a printed label and receipt.

The camera 30 includes an image capturing section 31 and a support section 32 for supporting the image capturing section 31. The image capturing section 31 includes an image capturing element such as a CCD (Charge Coupled Device) or a CMOS (Complementary Metal-Oxide Semiconductor). The support section 32 supports the image capturing section 31 over the scale pan 12. In this way, the image capturing section 31 photographs the commodity placed on the scale pan 12. Specifically, the image capturing section 31 photographs the container 40, the commodity in the container 40, and the commodity information 41 relating to the weighed commodity in the container 40.

Next, the hardware structure of the weighing system 1 mentioned above is described. Fig. 2 is a block diagram illustrating the hardware structure of the weighing system 1. The weighing system 1 includes a controller 100 for collectively controlling various operations and each section of the electronic scale 10. The controller 100 is a microcomputer equipped with a CPU (Central Processing Unit), a ROM (Read Only Memory), a RAM (Random Access Memory), and an RTC (Real Time Clock). The CPU executes various computing processing to control various functions of the weighing system 1. The ROM stores various programs and data. The RAM temporarily stores various programs and various data in a rewritable manner. The RTC counts current date and time.

The controller 100 is connected with the first display section 13, the first touch panel 14, the keyboard 15, the second display section 16, the second touch panel 17, the weighing section 101, a first connection interface 102, a second connection interface 103 and a storage section 104 via a bus line 105. The controller 100 is connected with the printer 20 via the first connection interface 102. Further, the controller 100 is connected with the image capturing section 31 via the second connection interface 103.

The controller 100 controls the first display section 13, the first touch panel 14, the keyboard 15, the second display section 16, the second touch panel 17, the weighing section 101, the first connection interface 102, the second connection interface 103 and the storage section 104. The controller 100 controls the printer 20 via the first connection interface 102. Further, the controller 100 controls the image capturing section 31 via the second connection interface 103.

The weighing section 101 is a balance for weighing the container 40 placed on the scale pan 12 and the commodity in the container 40. The weighing section 101 is provided with a load cell (not shown) and an analog/digital conversion circuit (not shown). The load cell connected with the scale pan 12 is a sensor for measuring the weight of the commodity placed on the scale pan 12. The load cell outputs a measurement value, i.e., analog value, corresponding to the weight of a measured object containing the commodity. The analog/digital conversion circuit converts the analog value to a digital value.

The printer 20 is equipped with the printing section (not shown) for carrying out a drive-control on the basis of the print data. The controller 100 uses a part of an area of the RAM as a printing buffer to control the printing section. In this way, the controller 100 drives a thermal head and a pulse motor of the printer 20 to print the label and the receipt.

The storage section 104 includes an HDD (Hard Disk Drive) and an SSD (Solid State Drive). The storage section 104 stores various programs executed by the controller 100 (CPU) and a database. The storage section 104 stores, for example, a control program PR and a container master file M1. The control program PR enables the controller 100 to realize various functions of the weighing system 1.

Fig. 3 is a view illustrating an example of the data structure of the container master file M1. The container master file M1 is a database including information relating to the container 40 in which the commodity is put. The storage section 104 may store one or a plurality of databases into which the container master file M1 is divided. The container master file M1 may be stored in other devices such as a store server (not shown) instead of the storage section 104. In this case, the weighing system 1 extracts necessary information from the device which stores the container master file M1 via a communication interface (not shown).

The container master file M1 stores a container code, a container category name, a weight of a container, and a feature amount of a container for each category of the container 40. The container code is identification information capable of identifying the category of the container 40. The container category name is a name of each category of the container 40. The weight of the container is weight in each category of the container 40. The feature amount of the container 40 is obtained by, for example, parameterizing a shape of the container 40, a size of the container 40, and an appearance of the container 40 such as unevenness state.

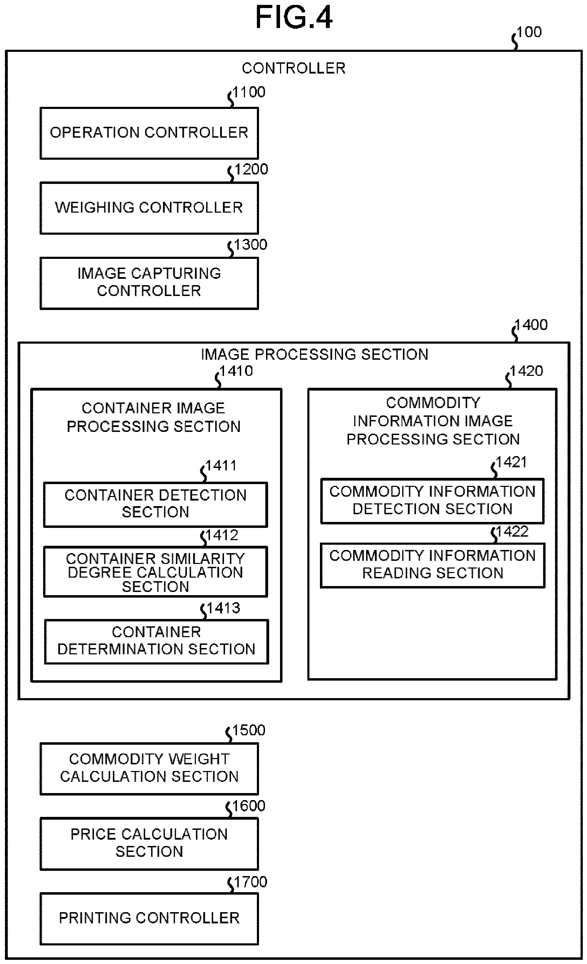

Next, the functional components of the weighing system 1 are described. Fig. 4 is a block diagram illustrating functional components of the weighing system 1.

The CPU of the controller 100 operates according to the control program PR copied or decompressed on the RAM to realize each functional section shown in Fig. 4 on the RAM. In particular, the weighing system 1 includes, as functional sections, an operation controller 1100, a weighing controller 1200, an image capturing controller 1300, an image processing section 1400, a commodity weight calculation section 1500, a price calculation section 1600, and a printing controller 1700. The image processing section 1400 is provided with a container image processing section 1410 and a commodity information image processing section 1420. The container image processing section 1410 is provided with a container detection section 1411, a container similarity degree calculation section 1412 and a container determination section 1413. The commodity information image processing section 1420 is provided with a commodity information detection section 1421, and a commodity information reading section 1422.

The operation controller 1100 controls the first touch panel 14, the keyboard 15 and the second touch panel 17 to receive various operations.

The weighing controller 1200 controls the weighing section 101 to measure the weight of an article placed on the scale pan 12. For example, the weighing controller 1200 measures the weight of the container 40 placed on the scale pan 12 and the commodity in the container 40.

The image capturing controller 1300 controls the image capturing section 31 to photograph the article placed on the scale pan 12. For example, the image capturing controller 1300 enables the image capturing section 31 to photograph the container 40 measured by the weighing section 101 and the commodity information 41 relating to the measured commodity in the container 40. The image capturing controller 1300 enables the image capturing section 31 to start an image capturing operation on condition that the weight of the article placed on the scale pan 12 is measured. The image capturing controller 1300 stores the image captured by the image capturing section 31 in the RAM.

The image capturing controller 1300 enables the image capturing section 31 to capture a container identification image used to identify the container 40 by the container image processing section 1410 and a commodity information reading image used to read the commodity information 41 by the commodity information image processing section 1420 in the manner of different image capturing settings. In order to identify the container 40, the container image processing section 1410 is required to capture the container identification image in proper settings of an aperture setting for adjusting the brightness of an image, a contrast setting for adjusting the intensity of the image and a sharpness setting capable of clearly distinguishing contours. On the other hand, the commodity information image processing section 1420 is required to capture the commodity information reading image in a proper setting so as to accurately read the commodity information 41 on a white base background. Thus, the image capturing controller 1300 acting as an image capturing control module enables the image capturing section 31 to capture the container identification image and the commodity information reading image in different settings. The image capturing controller 1300 changes a first setting to a second setting under which the commodity information reading image is captured immediately after the container identification image is captured in the first setting. The order of the capturing of the container identification image and the commodity information reading image is an example; however, the capturing of the container identification image and the commodity information reading image may be executed in other orders.

The image capturing controller 1300 enables the image capturing section 31 to capture the commodity information reading image without capturing the container identification image on condition that the container 40 is not placed on the scale pan 12. In other words, the image capturing controller 1300 enables the image capturing section 31 to capture the commodity information reading image without capturing the container identification image on condition that the weighing controller 1200 does not detect the weight.

The image processing section 1400 processes the images captured by the image capturing controller 1300 to read various information from the images captured by the image capturing controller 1300. The image processing section 1400 generates container list information in which information relating to the container 40 and information relating to the commodity information 41 are associated with one another for each container 40 contained in the images captured by the image capturing controller 1300.

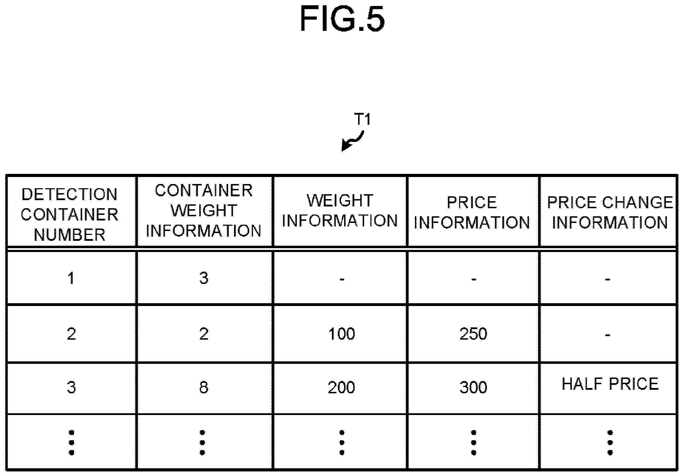

Fig. 5 is a view illustrating an example of the container list information T1. For example, the container list information T1 stores a detection container number, container weight information, weight information, price information and price change information in an associated manner. The detection container number is capable of identifying the container 40 contained in the image captured by the image capturing controller 1300. The container weight information is the weight of the container 40 contained in the image captured by the image capturing controller 1300. The container weight information is extracted through an image processing by the container image processing section 1410 described later. The weight information indicates the weight of the commodity in the container 40. The price information indicates a price of the commodity in the container 40. The price change information indicates that the price of the measured commodity in the container 40 is changed. For example, the price change information includes information for designating a price such as 10 Yen decrease in price and information for designating a discount rate of the price of the measured commodity such as a half price to change the price. The weight information, the price information and the price change information are read from the commodity information 41 through the image processing by the commodity information image processing section 1420 described later.

The container image processing section 1410 executes the image processing for identifying the container 40 contained in the container identification image on the basis of the container identification image captured by the image capturing section 31. In other words, the container image processing section 1410 acting as an identification module identifies the weight of the container 40 by identifying which one of the categories of the container 40 in the container master file M1 the category of the container 40 contained in the container identification image captured by the image capturing section 31 corresponds to. The container image processing section 1410 is equipped with the container detection section 1411, the container similarity degree calculation section 1412 and the container determination section 1413.

The container detection section 1411 detects one or a plurality of the containers 40 with a pattern matching technology from the container identification images stored in the RAM by the image capturing controller 1300. In particular, the container detection section 1411 extracts counter lines from an image obtained by binarizing the acquired container identification image. In other words, the container detection section 1411 detects the container 40 on the basis of a difference between an image which does not contain the container 40 and the counter lines extracted from an image which contains the container 40. The container detection section 1411 assigns a detection container number capable of identifying the container 40 in the container list information T1 to each detected container 40.

The container similarity degree calculation section 1412 calculates a container similarity degree between the container 40 detected by the container detection section 1411 and the category of the container 40 registered in the container master file M1. In particular, the container similarity degree calculation section 1412 extracts a container feature amount of the appearance of the container 40 detected by the container detection section 1411 from the container identification image of the container 40 captured by the image capturing section 31. At this time, the container similarity degree calculation section 1412 extracts information obtained by parameterizing the shape of the container 40, the size of the container 40 and the appearance of the container 40 such as unevenness state as the container feature amount of the appearance of the container 40. Alternatively, the container similarity degree calculation section 1412 extracts information obtained by parameterizing all or a part of colors of the container 40 as the container feature amount of the appearance of the container 40. Furthermore, the container similarity degree calculation section 1412 may extract the container feature amount containing both the container feature amount relating to the appearance of the container 40 and the container feature amount relating to all or a part of colors of the container 40.

The container similarity degree calculation section 1412 compares the container feature amount of the category of the container 40 registered in the container master file M1 with the container feature amount of the container 40 contained in the container identification image to calculate the similarity degree. The container similarity degree indicates how much similar the container feature amount of all or a part of the container 40 is with the category of the container 40 registered in the container master file M1 in a case in which the container feature amount of the container 40 registered in the container master file M1 is set to 100%= "the container similarity degree: 1.0".

The recognition of the article contained in the image in this manner is referred to as a general object recognition. Various recognition technologies in the following document are explained in terms of the general object recognition:
Keiji Yanai, "current state and future of Generic object recognition", information processing Society Journal, Vol. 48, No. SIG16 [February 21, 2016, search], Internet <URL: http://mm.cs.uec.ac.jp/IPSJ-TCVIM-Yanai.pdf>

Furthermore, a technology for executing the general object recognition through segmenting an image for each object is explained in the following document:
Jamie Shotton et al., "Semantic Texton Forests for Image Categorization and Segmentation", [February 21, 2016, search], Internet <URL: http: // cite seerx.ist.psu.edu/viewdoc/download?doi=10.1.1.145.3036&rep = rep1 & type = pdf>

The container determination section 1413 determines which one of the categories of the containers 40 registered in the container master file M1 the container 40 detected by the container detection section 1411 corresponds to. The container determination section 1413 determines the category of the container 40 of which the weight is measured by the weighing section 101 on the basis of the container similarity degree calculated by the container similarity degree calculation section 1412. In particular, the container determination section 1413 determines that the category of the container 40 of which the container similarity degree calculated by the container similarity degree calculation section 1412 is highest is the category of the container 40 detected by the container detection section 1411. In other words, the container determination section 1413 identifies which one of the categories of the container 40 in the container master file M1 the category of the container 40 contained in the container identification image captured by the image capturing section 31 corresponds to. The container determination section 1413 extracts the container weight of the container 40 the category of which is identified from the container master file M1. The container determination section 1413 registers the extracted container weight as the container weight information in the container list information T1. The container image processing section 1410 registers the container weight information for each container 40 detected by the container detection section 1411.

The commodity information image processing section 1420 executes the image processing for reading the commodity information 41 contained in the commodity information reading image on the basis of the commodity information reading image captured by the image capturing section 31. In other words, the commodity information image processing section 1420 acting as the reading module reads the weight information, the price information and the price change information from the commodity information 41 contained in the commodity information reading image captured by the image capturing section 31.

The commodity information detection section 1421 detects the commodity information 41 for each container 40. There is a case in which the image capturing section 31 photographs a plurality of the containers 40. It is necessary for the commodity information detection section 1421 to identify which one of the containers 40 the detected commodity information 41 relates to if a plurality of the containers 40 is photographed. For example, in a case in which commodity information 41 indicating the half price is attached to the container 40, the commodity information detection section 1421 must set the price of the commodity in the container 40 to which the commodity information 41 is attached to a half price. In other words, the commodity information detection section 1421 cannot set the price of the commodity in the container 40 to the half price if the commodity information 41 indicating the half price is not attached to the container 40. Thus, the commodity information detection section 1421 identifies which one of the containers 40 the detected commodity information 41 relates to. In particular, the commodity information detection section 1421 overlays the counter lines of one or a plurality of the containers 40 extracted by the container detection section 1411 from the container identification image on the commodity information reading image. The commodity information detection section 1421 determines which one of the counter lines of the containers 40 the detected commodity information 41 is located in. The commodity information detection section 1421 determines that the container 40 including the detected commodity information 41 at the inner side of counter lines thereof is the container 40 with the detected commodity information 41. Furthermore, the commodity information detection section 1421 extracts the detection container number assigned to the container 40 detected. The commodity information detection section 1421 uses the result of the container detection section 1411 to detect the commodity information 41. However, the detection method is an example, and the commodity information 41 may be detected with other methods. For example, the commodity information detection section 1421 may individually extract counter lines of the container 40 similar to that by the container detection section 1411.

The commodity information reading section 1422 reads the commodity information 41 detected by the commodity information detection section 1421. The commodity information reading section 1422 can read the commodity information 41 with various methods. For example, the commodity information reading section 1422 reads the commodity information 41 by decoding a code symbol on condition that the commodity information 41 is represented with the code symbol. The commodity information reading section 1422 reads the commodity information 41 with OCR (Optical Character Recognition) on condition that the commodity information 41 is indicated with numerals or characters. The commodity information reading section 1422 reads the commodity information 41 through pattern matching on condition that the commodity information 41 is indicated with figures.

The commodity information reading section 1422 registers various information contained in the read commodity information 41 in the container list information T1 in association with the detection container number extracted by the commodity information detection section 1421. In other words, the commodity information reading section 1422 registers various information contained in the read commodity information 41 in the container list information T1 in association with the detection container number relating to the container 40 of which the commodity information 41 is detected by the commodity information detection section 1421. In particular, the commodity information reading section 1422 registers the read weight information in the container list information T1 on condition that the commodity information 41 contains the weight information. Further, the commodity information reading section 1422 registers the read price information in the container list information T1 on condition that the commodity information 41 contains the price information. Still further, the commodity information reading section 1422 registers the read price change information in the container list information T1 on condition that the commodity information 41 contains the price change information. In other words, the commodity information image processing section 1420 executes a processing for trying registration of the weight information, the price information and the price change information for individual commodity information 41 detected by the commodity information detection section 1421.

The commodity weight calculation section 1500 calculates an unmeasured commodity weight indicating the weight of the unmeasured commodity placed on the scale pan 12. In other words, the commodity weight calculation section 1500 acting as a first calculation module calculates the weight of the commodity not yet measured according to the weight measured by the weighing controller 1200, the weight of the category of the container 40 identified by the container image processing section 1410 and the weight read by the commodity information image processing section 1420 from the commodity information 41. In particular, the commodity weight calculation section 1500 calculates a container weight total value indicating a total value of the container weight information in the container list information T1. The commodity weight calculation section 1500 subtracts the container weight total value from the weight measured by the weighing controller 1200 to calculate a container exclusion weight indicating the weight excluding the weight of the container 40. Further, the commodity weight calculation section 1500 calculates a commodity weight total value indicating a total value of the weight information in the container list information T1. The commodity weight calculation section 1500 subtracts the commodity weight total value from the container exclusion weight excluding the weight of the container 40 to calculate the unmeasured commodity weight indicating the weight of the commodity not yet measured.

The price calculation section 1600 calculates a commodity price total amount indicating the total price of the commodity placed on the scale pan 12. In other words, the price calculation section 1600 acting as a third calculation module calculates the price of the unmeasured commodity on the basis of the unmeasured commodity weight calculated by the commodity weight calculation section 1500 and a price per unit weight of the commodity. In particular, the price calculation section 1600 calculates a read commodity price indicating a total price of the measured commodity. In other words, the price calculation section 1600 calculates the read commodity price indicating the total price after applying the price change information to the price information in the container list information T1. The price calculation section 1600 calculates an unmeasured commodity price indicating a total price of the unmeasured commodity. In other words, the price calculation section 1600 multiplies a unit price per unit weight of the commodity in the container 40 by the weight calculated by the commodity weight calculation section 1500 to calculate the unmeasured commodity price indicating the price of the measured commodity. The price calculation section 1600 adds the unmeasured commodity price to the read commodity price to calculate the commodity price total amount. The unit price per unit weight of the commodity in the container 40 is specified through various methods. For example, the unit price per unit weight is determined according to an operation received by the first touch panel 14. Alternatively, the unit price per unit weight may be a unit price per weight of the commodity in the container 40 with respect to each category of the container 40.

The printing controller 1700 prints a receipt on which the price of the commodity calculated by the price calculation 1600 is printed.

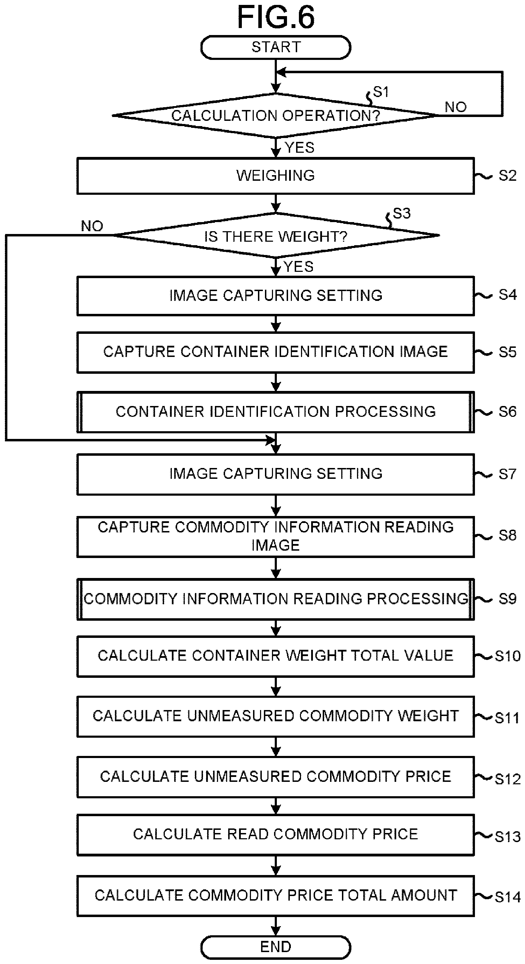

Next, a calculation processing executed according to the control program PR by the controller 100 of the weighing system 1 of the foregoing embodiment is described. The calculation processing is a processing for calculating the total price of the commodity placed on the scale pan 12. Fig. 6 is a flowchart illustrating the flow of the calculation processing executed by the weighing system 1 according to the embodiment.

First, the operation controller 1100 of the weighing system 1 determines whether or not an operation for calculating the total price of the commodity placed on the scale pan 12 is received (Act S1). If the operation for calculating the total price is not received (No in Act S1), the weighing system 1 stands by until the operation is received.

On the other hand, if the operation for calculating the total price is received (Yes in Act S1), the weighing controller 1200 of the weighing system 1 measures the weight of the articles placed on the scale pan 12 (Act S2). The weighing controller 1200 of the weighing system 1 determines whether or not there is the weight on the scale pan 12 (Act S3). In other words, the weighing controller 1200 determines whether or not the articles are placed on the scale pan 12. If there exists no weight (No in Act S3), the weighing system 1 proceeds to the processing in Act S7.

On the other hand, if there is the weight (Yes in Act S3), the image capturing controller 1300 of the weighing system 1 sets the capturing setting of the image capturing section 31 to the setting for the capturing of the container identification image (Act S4). The image capturing controller 1300 of the weighing system 1 enables the image capturing section 31 to capture the container identification image (Act S5).

The weighing system 1 executes a container identification processing described later (Act S6).

The image capturing controller 1300 of the weighing system 1 sets the capturing setting of the image capturing section 31 to the setting for the capturing of the commodity information reading image (Act S7). The image capturing controller 1300 of the weighing system 1 enables the image capturing section 31 to capture the commodity information reading image (Act S8).

The weighing system 1 executes a commodity information reading processing described later (Act S9).

The commodity weight calculation section 1500 of the weighing system 1 calculates the container weight total value indicating the total weight of the container 40 placed on the scale pan 12 (Act S10). The commodity weight calculation section 1500 of the weighing system 1 calculates the unmeasured commodity weight indicating the weight of the unmeasured commodity placed on the scale pan 12 (Act S11).

The price calculation section 1600 of the weighing system 1 calculates the unmeasured commodity price indicating the total price of the unmeasured commodity (Act S12). The price calculation section 1600 of the weighing system 1 calculates the read commodity price indicating the total price of the measured commodity (Act S13). The price calculation section 1600 of the weighing system 1 calculates the commodity price total amount indicating the total price of the commodity placed on the scale pan 12 (Act S14).

In this way, the weighing system 1 terminates the calculation processing.

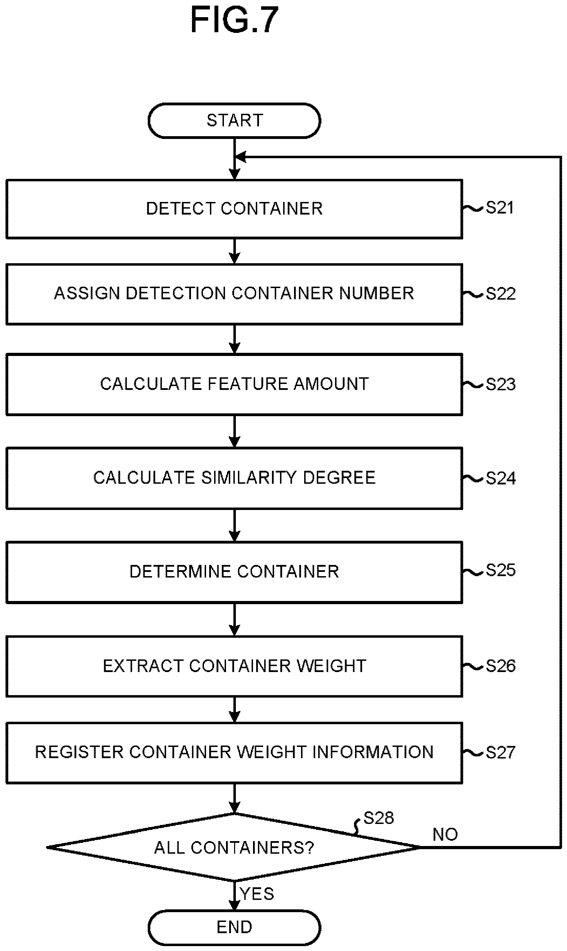

The container identification processing executed according to the control program PR by the controller 100 of the weighing system 1 of the foregoing embodiment is described. Fig. 7 is a flowchart illustrating the flow of the container identification processing executed by the weighing system 1 according to the embodiment.

The container detection section 1411 of the weighing system 1 detects the container 40 from the container identification image captured by the image capturing controller 1300 (Act S21). The container detection section 1411 of the weighing system 1 assigns the detection container number in the container list information T1 to the detected container 40 (Act S22).

The container similarity degree calculation section 1412 of the weighing system 1 calculates the container feature amount of the container 40 detected by the container detection section 1411 (Act S23). The container similarity degree calculation section 1412 of the weighing system 1 calculates the container similarity degree between the calculated container feature amount and the container feature amount of each category of the container 40 contained in the container master file M1 (Act S24). The container determination section 1413 of the weighing system 1 determines that the container 40 with the highest container similarity degree is the container 40 contained in the image (Act S25).

The container determination section 1413 of the weighing system 1 extracts the container weight in the category of the determined container from the container master file M1 (Act S26). The container determination section 1413 of the weighing system 1 registers the extracted container weight in the container list information T1 as the container weight information (Act S27).

The container detection section 1411 of the weighing system 1 determines whether or not the container identification processing is executed to all the containers 40 contained in the container identification image (Act S28). If the container identification processing is not executed to all the containers 40 contained in the container identification image (No in Act S28), the container detection section 1411 of the weighing system 1 proceeds to the processing in Act S21. On the other hand, the container identification processing is executed to all the containers 40 contained in the container identification image (Yes in Act S28), the weighing system 1 terminates the container identification processing.

In this way, the weighing system 1 terminates the container identification processing.

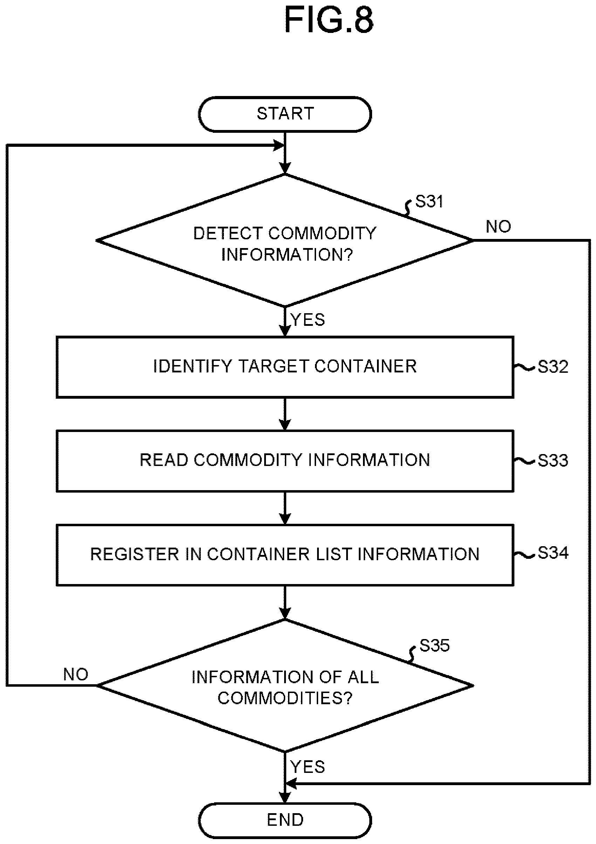

The commodity information reading processing executed according to the control program PR by the controller 100 of the weighing system 1 of the foregoing embodiment is described. Fig. 8 is a flowchart illustrating the flow of the commodity information reading processing executed by the weighing system 1 according to the embodiment.

The commodity information detection section 1421 of the weighing system 1 determines whether or not the commodity information 41 is detected from the commodity information reading image (Act S31). If the commodity information 41 is not detected (No in Act S31), the weighing system 1 terminates the commodity information reading processing.

On the other hand, if the commodity information 41 is detected (Yes in Act S31), the commodity information detection section 1421 of the weighing system 1 identifies which one of the containers 40 the detected commodity information 41 belongs to (Act S32). The commodity information reading section 1422 of the weighing system 1 reads the detected commodity information 41 (Act S33). the commodity information reading section 1422 of the weighing system 1 registers various information contained in the commodity information 41 in the container list information T1 (Act S34).

The commodity information detection section 1421 of the weighing system 1 determines whether or not all the commodity information 41 in the commodity information reading image is read (Act S35). If all the commodity information 41 is not read (No in Act S35), the weighing system 1 proceeds to the processing in Act S31. On the other hand, if all the commodity information 41 is read (Yes in Act S35), the weighing system 1 terminates the commodity information reading processing.

In this way, the weighing system 1 terminates the commodity information reading processing.

As described above, according to the weighing system 1 of the present embodiment, the weighing section 101 measures the weight of the container 40 placed on the scale pan 12 and the weight of the commodity in the container 40. The image capturing section 31 photographs the container 40 measured by the weighing section 101 and the commodity information 41 relating to the measured commodity in the container 40. The container image processing section 1410 identifies the category of the container 40 by carrying out the image processing to the container identification image captured by the image capturing section 31. Further, the container image processing section 1410 extracts the weight of the identified container 40 from the container master file M1. The commodity weight calculation section 1500 calculates the container weight total value indicating the total weight of the container 40. The commodity information image processing section 1420 reads the commodity information 41 by carrying out the image processing to the commodity information reading image captured by the image capturing section 31. The commodity weight calculation section 1500 subtracts the container weight total value and the total value of the weight information from the weight measured by the weighing section 101 to calculate the unmeasured commodity weight on condition that the weight information is contained in the commodity information 41 read by the commodity information image processing section 1420. Thus, the weighing system 1 of the present embodiment can calculate the weight of the unmeasured commodity.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

The programs executed by each device of the foregoing embodiment and the modification may be incorporated into a storage medium (ROM or storage section) of each device in advance to be provided; however, the present invention is not limited to this. The programs may be recorded in a computer-readable recording medium such as a CD-ROM, a FD (Flexible Disk), a CD-R, a DVD (Digital Versatile Disk) and the like in the form of installable or executable file to be provided. Further, the storage medium is not limited to a medium independent from a computer or an embedded system and also contains a storage medium that stores or temporarily stores the programs by downloading the programs transmitted through a LAN or an Internet.

Further, the programs executed by each device of the foregoing embodiment and the modification is stored in a computer connected with a network and downloaded via the network to be supplied or may be supplied or distributed via the network such as the Internet.

## Claims

1. A weighing system (1), comprising a reading module configured to read the weight from the commodity information contained in the image captured by the image capturing section, **characterized in that** it further comprises:
a weighing section configured to measure a weight of a container and a commodity in the container (40);
an image capturing section configured to capture an image containing the container (40) weighed by the weighing section and commodity information including information indicating the weight of the commodity in the container (40);
an identification module configured to identify the weight of the container (40) contained in the image captured by the image capturing section, by selecting in a container master file (M1), the corresponding category of the container (40) captured by the image capturing section, said container master file (M1) associating said category of the container (40) with a container weight; and
a first calculation module configured to calculate the weight of the unmeasured commodity from the weight measured by the weighing section, the weight in a category of the container (40) identified by the identification module and the weight read from the commodity information by the reading module.

2. The weighing system according to claim 1, further comprising:
a second calculation module configured to calculate a price of the unmeasured commodity on the basis of the weight of the unmeasured commodity calculated by the first calculation module and a price per unit weight of the commodity; and
a third calculation module configured to calculate a total price of the commodity placed on the weighing section, wherein
the third calculation module calculates the total price of the commodity placed on the weighing section from the price of the unmeasured commodity calculated by the second calculation module and the price of the commodity read from the commodity information by the reading module on condition that the reading module reads information indicating the price of the commodity in the container (40) from the commodity information.

3. The weighing system according to claim 2, wherein
the third calculation module calculates the total price of the commodity placed on the weighing section, using a price obtained by applying price change information to the price of the commodity on condition that the price change information for changing the price of the commodity is read by the reading module from the commodity information.

4. The weighing system according to any one of claims 1 to 3, further comprising:
an image capturing control module configured to enable the image capturing section to capture an image used to identify the weight of the container (40) by the identification module and an image used to read the commodity information by the reading module according to different image capturing settings.

5. The weighing system according to claim 4, wherein
the image capturing control module enables the image capturing section to capture an image used to read the commodity information by the reading module without capturing the image used to identify the weight of the container (40) by the identification module on condition that the weighing section does not detect the weight of the commodity.

6. A method for weighing a commodity, comprising the step of:
- reading, by a reading module, the weight from the commodity information contained in the image captured by the image capturing section;
**characterized in that** it comprises the steps of
- measuring, by a weighing section, a weight of a container (40) and a commodity in the container (40);
- capturing, by an image capturing section, an image containing the container (40) weighed by the weighing section and commodity information including information indicating the weight of the commodity in the container (40);
- identifying, by an identification module, the weight of the container (40) contained in the image captured by the image capturing section, said identifying comprising the selection in a container master file (M1) of the corresponding category of the container (40) captured by the image capturing section, said container master file (M1) associating said category of the container (40) with a container weight; and
- calculating, by a first calculation module, the weight of the unmeasured commodity from the weight measured by the weighing section, the weight in a category of the container (40) identified by the identification module and the weight read from the commodity information by the reading module.

7. The method according to claim 6, further comprising the steps of:
- calculating, by a second calculation module, a price of the unmeasured commodity on the basis of the weight of the unmeasured commodity calculated by the first calculation module and a price per unit weight of the commodity; and
- calculating, by a third calculation module, a total price of the commodity placed on the weighing section, wherein
the calculating step by the third calculation module comprises calculating the total price of the commodity placed on the weighing section from the price of the unmeasured commodity calculated by the second calculation module and the price of the commodity read from the commodity information by the reading module on condition that the reading module reads information indicating the price of the commodity in the container (40) from the commodity information.

8. The method according to claim 7, wherein
the calculating step by the third calculation module comprises calculating the total price of the commodity placed on the weighing section, using a price obtained by applying price change information to the price of the commodity on condition that the price change information for changing the price of the commodity is read by the reading module from the commodity information.

9. The method according to any one of claims 6 to 8, further comprising the step of:
- enabling, by an image capturing control module, the image capturing section to capture an image used to identify the weight of the container (40) by the identification module and an image used to read the commodity information by the reading module according to different image capturing settings.

10. The method according to claim 9, wherein
the enabling step by the image capturing control module comprises enabling the image capturing section to capture an image used to read the commodity information by the reading module without capturing the image used to identify the weight of the container (40) by the identification module on condition that the weighing section does not detect the weight of the commodity.

11. A computer-readable recording medium having computer-executable instructions adapted to cause the computer system to perform the method according to any one of claims 6 to 10.

12. A computer program product comprising program code means stored on a computer readable medium for performing the method according to any one of claims 6 to 10, when the program product us run on a computer.

## Patentansprüche

1. Wiegesystem (1), umfassend ein Lesemodul, das dazu gestaltet ist, das Gewicht von einer Wareninformation abzulesen, die in dem Bild enthalten ist, welches durch den Bildaufnahmeabschnitt aufgenommen wurde, **dadurch gekennzeichnet, dass** es ferner Folgendes umfasst:
einen Wiegeabschnitt, der dazu gestaltet ist, ein Gewicht eines Behälter und einer Ware in dem Behälter (40) zu messen,
einen Bildaufnahmeabschnitt, der dazu gestaltet ist, ein Bild aufzunehmen, das den Behälter (40), der durch den Wiegeabschnitt gewogen wurde, und Wareninformationen enthält, die Informationen beinhalten, die das Gewicht der Ware in dem Behälter (40) angeben,
ein Identifizierungsmodul, das dazu gestaltet ist, das Gewicht des Behälters (40) zu identifizieren, der in dem Bild enthalten ist, welches durch den Bildaufnahmeabschnitt aufgenommen wurde, durch Auswählen der entsprechenden Kategorie des Behälters (40), der durch den Bildaufnahmeabschnitt aufgenommen wurde, in einer Behälter-Master-Datei (M1), wobei die Behälter-Master-Datei (M1) der Kategorie des Behälters (40) ein Behältergewicht zuordnet, und
ein erstes Berechnungsmodul, das dazu gestaltet ist, das Gewicht der ungemessenen Ware aus dem Gewicht, das durch den Wiegeabschnitt gemessen wurde, dem Gewicht in einer Kategorie des Behälters (40), der durch das Identifizierungsmodul identifiziert wurde, und dem Gewicht, das durch das Lesemodul von den Wareninformationen abgelesen wurde, zu berechnen.

2. Wiegesystem nach Anspruch 1, ferner umfassend:
ein zweites Berechnungsmodul, das dazu gestaltet ist, einen Preis der ungemessenen Ware auf Basis des Gewichts der ungemessenen Ware, das durch das erste Berechnungsmodul berechnet wurde, und eines Preises pro Gewichtseinheit der Ware zu berechnen, und
ein drittes Berechnungsmodul, das dazu gestaltet ist, einen Gesamtpreis der Ware, die auf dem Wiegeabschnitt platziert wurde, zu berechnen, wobei
das dritte Berechnungsmodul den Gesamtpreis der Ware, die auf dem Wiegeabschnitt platziert wurde, aus dem Preis der ungemessenen Ware, der durch das zweite Berechnungsmodul berechnet wurde, und dem Preis der Ware, der durch das Lesemodul von der Wareninformation abgelesen wurde, berechnet, unter der Bedingung, dass das Lesemodul Informationen abliest, die den Preis der Ware in dem Behälter (40) von den Wareninformationen angeben.

3. Wiegesystem nach Anspruch 2, wobei
das dritte Berechnungsmodul den Gesamtpreis der Ware, die auf dem Wiegeabschnitt platziert wurde, unter Verwendung eines Preises berechnet, der durch Anwenden von Preisänderungsinformationen auf den Preis der Ware erhalten wird, unter der Bedingung, dass die Preisänderungsinformationen zum Ändern des Preises der Ware durch das Lesemodul von den Wareninformationen abgelesen werden.

4. Wiegesystem nach einem der Ansprüche 1 bis 3, ferner umfassend:
ein Bildaufnahmesteuermodul, das dazu gestaltet ist, den Bildaufnahmeabschnitt zu aktivieren, um gemäß verschiedenen Bildaufnahmeeinstellungen ein Bild aufzunehmen, das verwendet wird, um das Gewicht des Behälters (40) durch das Identifizierungsmodul zu identifizieren, und ein Bild, das verwendet wird, um die Wareninformationen durch das Lesemodul abzulesen.

5. Wiegesystem nach Anspruch 4, wobei
das Bildaufnahmesteuermodul den Bildaufnahmeabschnitt aktiviert, um ein Bild aufzunehmen, das verwendet wird, um die Wareninformationen durch das Lesemodul abzulesen, ohne das Bild aufzunehmen, das verwendet wird, um das Gewicht des Behälters (40) durch das Identifizierungsmodul zu identifizieren, unter der Bedingung, dass der Wiegeabschnitt das Gewicht der Ware nicht erkennt.

6. Verfahren zum Wiegen einer Ware, folgende Schritte umfassend:
- Lesen, durch ein Lesemodul, des Gewichts aus den Wareninformationen, die in dem Bild enthalten sind, das durch den Bildaufnahmeabschnitt aufgenommen wurde,
**dadurch gekennzeichnet, dass** es die folgenden Schritte umfasst:
- Messen, durch einen Wiegeabschnitt, eines Gewichts eines Behälters (40) und einer Ware in dem Behälter (40),
- Aufnehmen, durch einen Bildaufnahmeabschnitt, eines Bildes, das den Behälter (40), der durch den Wiegeabschnitt gewogen wurde, und Wareninformationen enthält, die Informationen beinhalten, die das Gewicht der Ware in dem Behälter (40) angeben,
- Identifizieren, durch ein Identifizierungsmodul, des Gewichts des Behälters (40), das in dem Bild enthalten ist, welches durch den Bildaufnahmeabschnitt aufgenommen wurde, wobei das Identifizieren die Auswahl der entsprechenden Kategorie des Behälters (40), der durch den Bildaufnahmeabschnitt aufgenommen wurde, in einer Behälter-Master-Datei (M1) umfasst, wobei die Behälter-Master-Datei (M1) der Kategorie des Behälters (40) ein Behältergewicht zuordnet, und
- Berechnen, durch ein erstes Berechnungsmodul, des Gewichts der ungemessenen Ware aus dem Gewicht, das durch den Wiegeabschnitt gemessen wurde, dem Gewicht in einer Kategorie des Behälters (40), die durch das Identifizierungsmodul identifiziert wurde, und dem Gewicht, das von den Wareninformationen durch das Lesemodul abgelesen wurde.

7. Verfahren nach Anspruch 6, ferner die folgenden Schritte umfassend:
- Berechnen, durch ein zweites Berechnungsmodul, eines Preises der ungemessenen Ware auf Basis des Gewichts der ungemessenen Ware, das durch das erste Berechnungsmodul berechnet wurde, und eines Preises pro Gewichtseinheit der Ware, und
- Berechnen, durch ein drittes Berechnungsmodul, eines Gesamtpreises der Ware, die auf dem Wiegeabschnitt platziert wurde, wobei
der Berechnungsschritt durch das dritte Berechnungsmodul das Berechnen des Gesamtpreises der Ware, die auf dem Wiegeabschnitt platziert wurde, aus dem Preis der ungemessenen Ware, der durch das zweite Berechnungsmodul berechnet wurde, und dem Preis der Ware, der durch das Lesemodul von der Wareninformation abgelesen wurde, umfasst, unter der Bedingung, dass das Lesemodul Informationen abliest, die den Preis der Ware in dem Behälter (40) von den Wareninformationen angeben.

8. Verfahren nach Anspruch 7, wobei
der Berechnungsschritt durch das dritte Berechnungsmodul das Berechnen des Gesamtpreises der Ware, die auf dem Wiegeabschnitt platziert wurde, unter Verwendung eines Preises, der durch Anwenden von Preisänderungsinformationen auf den Preis der Ware erhalten wird, umfasst, unter der Bedingung, dass die Preisänderungsinformationen zum Ändern des Preises der Ware durch das Lesemodul von den Wareninformationen abgelesen werden.

9. Verfahren nach einem der Ansprüche 6 bis 8, ferner den folgenden Schritt umfassend:
- Aktivieren, durch ein Bildaufnahmesteuermodul, des Bildaufnahmeabschnitts, um gemäß verschiedenen Bildaufnahmeeinstellungen ein Bild aufzunehmen, das verwendet wird, um das Gewicht des Behälters (40) durch das Identifizierungsmodul zu identifizieren, und ein Bild, das verwendet wird, um die Wareninformationen durch das Lesemodul abzulesen.

10. Verfahren nach Anspruch 9, wobei
der Aktivierungsschritt durch das Bildaufnahmesteuermodul das Aktiveren des Bildaufnahmeabschnitts umfasst, um ein Bild aufzunehmen, das verwendet wird, um die Wareninformationen durch das Lesemodul abzulesen, ohne das Bild aufzunehmen, das verwendet wird, um das Gewicht des Behälters (40) durch das Identifizierungsmodul zu identifizieren, unter der Bedingung, dass der Wiegeabschnitt das Gewicht der Ware nicht erkennt.

11. Computerlesbares Aufzeichnungsmedium mit computerausführbaren Anweisungen, die dazu eingerichtet sind, das Computersystem zu veranlasse, das Verfahren nach einem der Ansprüche 6 bis 10 durchzuführen.

12. Computerprogrammprodukt, umfassend Programmcodemittel, die auf einem computerlesbaren Aufzeichnungsmedium gespeichert sind, zum Durchführen des Verfahrens nach einem der Ansprüche 6 bis 10, wenn das Programmprodukt auf einem Computer läuft.

## Revendications

1. Système de pesage (1), comprenant un module de lecture configuré de manière à lire le poids à partir des informations de marchandise contenues dans l'image capturée par le biais de la section de capture d'image, **caractérisé en ce qu'**il comprend en outre :
une section de pesage configurée de manière à mesurer un poids d'un récipient et d'une marchandise dans le récipient (40) ;
une section de capture d'image configurée de manière à capturer une image contenant le récipient (40) pesé par la section de pesage et des informations de marchandise incluant des informations indiquant le poids de la marchandise dans le récipient (40) ;
un module d'identification configuré de manière à identifier le poids du récipient (40) contenu dans l'image capturée par la section de capture d'image, en sélectionnant, dans un fichier maître de récipient (M1), la catégorie correspondante du récipient (40) capturé par la section de capture d'image, ledit fichier maître de récipient (M1) associant ladite catégorie du récipient (40) à un poids de récipient ; et
un premier module de calcul configuré de manière à calculer le poids de la marchandise non mesurée à partir du poids mesuré par la section de pesage, du poids dans une catégorie du récipient (40) identifié par le module d'identification et du poids lu à partir des informations de marchandise par le module de lecture.

2. Système de pesage selon la revendication 1, comprenant en outre :
un deuxième module de calcul configuré de manière à calculer un prix de la marchandise non mesurée, sur la base du poids de la marchandise non mesurée, calculé par le premier module de calcul, et d'un prix par unité de poids de la marchandise ; et
un troisième module de calcul configuré de manière à calculer un prix total de la marchandise placée sur la section de pesage, dans lequel
le troisième module de calcul calcule le prix total de la marchandise placée sur la section de pesage, à partir du prix de la marchandise non mesurée, calculé par le deuxième module de calcul, et du prix de la marchandise, lu à partir des informations de marchandise par le module de lecture, à condition que le module de lecture lise des informations indiquant le prix de la marchandise dans le récipient (40) à partir des informations de marchandise.

3. Système de pesage selon la revendication 2, dans lequel :
le troisième module de calcul calcule le prix total de la marchandise placée sur la section de pesage, en utilisant un prix obtenu en appliquant des informations de changement de prix au prix de la marchandise, à condition que les informations de changement de prix pour changer le prix de la marchandise soient lues par le module de lecture à partir des informations de marchandise.

4. Système de pesage selon l'une quelconque des revendications 1 à 3, comprenant en outre :
un module de commande de capture d'image configuré de manière à permettre à la section de capture d'image de capturer une image utilisée pour identifier le poids du récipient (40), par le biais du module d'identification, et une image utilisée pour lire les informations de marchandise, par le biais du module de lecture, selon différents paramètres de capture d'image.

5. Système de pesage selon la revendication 4, dans lequel :
le module de commande de capture d'image permet à la section de capture d'image de capturer une image utilisée pour lire les informations de marchandise, par le biais du module de lecture, sans capturer l'image utilisée pour identifier le poids du récipient (40), par le biais du module d'identification, à condition que la section de pesage ne détecte pas le poids de la marchandise.

6. Procédé de pesage d'une marchandise, comprenant l'étape ci-dessous consistant à :
- lire, par le biais d'un module de lecture, le poids, à partir des informations de marchandise contenues dans l'image capturée par la section de capture d'image ;
**caractérisé en ce qu'**il comprend les étapes ci-dessous consistant à :
- mesurer, par le biais d'une section de pesage, un poids d'un récipient (40) et d'une marchandise dans le récipient (40) ;
- capturer, par le biais d'une section de capture d'image, une image contenant le récipient (40) pesé par la section de pesage et des informations de marchandise incluant des informations indiquant le poids de la marchandise dans le récipient (40) ;
- identifier, par le biais d'un module d'identification, le poids du récipient (40) contenu dans l'image capturée par la section de capture d'image, ladite étape d'identification comprenant la sélection, dans un fichier maître de récipient (M1), de la catégorie correspondante du récipient (40) capturé par la section de capture d'image, ledit fichier maître de récipient (M1) associant ladite catégorie du récipient (40) à un poids de récipient ; et
- calculer, par le biais d'un premier module de calcul, le poids de la marchandise non mesurée, à partir du poids mesuré par la section de pesage, du poids dans une catégorie du récipient (40) identifié par le module d'identification et du poids lu à partir des informations de marchandise par le module de lecture.

7. Procédé selon la revendication 6, comprenant en outre les étapes ci-dessous consistant à :
- calculer, par le biais d'un deuxième module de calcul, un prix de la marchandise non mesurée, sur la base du poids de la marchandise non mesurée calculé par le premier module de calcul, et d'un prix par unité de poids de la marchandise ; et
- calculer, par le biais d'un troisième module de calcul, un prix total de la marchandise placée sur la section de pesage, dans lequel
l'étape de calcul mise en œuvre par le troisième module de calcul consiste à calculer le prix total de la marchandise placée sur la section de pesage à partir du prix de la marchandise non mesurée, calculé par le deuxième module de calcul, et du prix de la marchandise, lu à partir des informations de marchandise par le module de lecture, à condition que le module de lecture lise des informations indiquant le prix de la marchandise dans le récipient (40) à partir des informations de marchandise.

8. Procédé selon la revendication 7, dans lequel :
l'étape de calcul mise en œuvre par le troisième module de calcul consiste à calculer le prix total de la marchandise placée sur la section de pesage, en utilisant un prix obtenu en appliquant des informations de changement de prix au prix de la marchandise, à condition que les informations de changement de prix pour changer le prix de la marchandise soient lues par le module de lecture à partir des informations de marchandise.

9. Procédé selon l'une quelconque des revendications 6 à 8, comprenant en outre l'étape ci-dessous consistant à :
- permettre, par le biais d'un module de commande de capture d'image, à la section de capture d'image, de capturer une image utilisée pour identifier le poids du récipient (40) par le biais du module d'identification, et une image utilisée pour lire les informations de marchandise, par le biais du module de lecture, selon différents paramètres de capture d'image.

10. Procédé selon la revendication 9, dans lequel :
l'étape de permission mise en œuvre par le module de commande de capture d'image consiste à permettre, à la section de capture d'image, de capturer une image utilisée pour lire les informations de marchandise, par le biais du module de lecture, sans capturer l'image utilisée pour identifier le poids du récipient (40), par le biais du module d'identification, à condition que la section de pesage ne détecte pas le poids de la marchandise.

11. Support d'enregistrement lisible par ordinateur présentant des instructions exécutables par ordinateur aptes à amener le système informatique à mettre en œuvre le procédé selon l'une quelconque des revendications 6 à 10.

12. Produit-programme informatique comprenant des moyens de code de programme stockés sur un support lisible par ordinateur pour mettre en œuvre le procédé selon l'une quelconque des revendications 6 à 10, lorsque le produit-programme informatique est exécuté sur un ordinateur.
